Europäisches Patentamt

European Patent Office

Office européen des brevets

(19)

(11) Veröffentlichungsnummer: **0 320 734 B1**

(12) **EUROPÄISCHE PATENTSCHRIFT**

(45) Veröffentlichungstag der Patentschrift: **10.02.93**

(51) Int. Cl.⁵: **C09D 125/14**, C08G 63/66

(21) Anmeldenummer: **88120238.6**

(22) Anmeldetag: **03.12.88**

(54) **Polymerisierbares wasserlösliches Bindemittel.**

(30) Priorität: **15.12.87 DE 3742446**

(43) Veröffentlichungstag der Anmeldung:
**21.06.89 Patentblatt 89/25**

(45) Bekanntmachung des Hinweises auf die
Patenterteilung:
**10.02.93 Patentblatt 93/06**

(84) Benannte Vertragsstaaten:
**AT BE DE FR GB IT NL SE**

(56) Entgegenhaltungen:
**EP-A- 0 037 463**
**EP-A- 0 167 962**
**DE-A- 1 805 197**

(73) Patentinhaber: **Wolff Walsrode Aktiengesellschaft
Postfach
W-3030 Walsrode 1(DE)**

(72) Erfinder: **Piepho, Michael, Dr.
Fichtenweg 10
W-3032 Fallingbostel 2(DE)**
Erfinder: **Lühmann, Erhard
Kastanienweg 2
W-3036 Bomlitz(DE)**
Erfinder: **Hoppe, Lutz, Dr.
Am Badeteich 8
W-3030 Walsrode(DE)**
Erfinder: **Szablikowski, Klaus, Dr.
Claudiusstrasse 5
W-3030 Walsrode(DE)**

(74) Vertreter: **Zobel, Manfred, Dr. et al
c/o BAYER AG Konzernverwaltung RP Patentabteilung Bayerwerk
W-5090 Leverkusen(DE)**

EP 0 320 734 B1

**Beschreibung**

Die Erfindung bezieht sich auf wasserlösliche, polymerisierbare Bindemittel für Lackanwendungen.

Lacksysteme mit keinem oder nur geringem Gehalt an organischen Lösungsmitteln finden wachsendes Interesse (vgl. z.B. O. Lückert, Emissionsarm Lackieren; C.R. Vincentz-Verlag, Hannover, 1987). In vielen Anwendungsfällen ist jedoch nach wie vor die Verwendung von Verdünnungsmitteln zur Einstellung der geeigneten Verarbeitungsviskosität erforderlich.

Man kann das Lackbindemittel mit sog. Reaktivverdünnern (wie z.B. Hexandioldiacrylat) kombinieren, die vor der Lackhärtung als Lösungsmittel dienen, nach der Härtung jedoch chemisch in den Lackfilm eingebaut sind (vgl. z.B. R. Holman, UV & EB Curing Formulation for Printing Inks, Coatings and paints, Sita-Technol.-Verlag, London 1984, S. 47).

Derartige Lacksysteme aus Bindemittel und Reaktivverdünnern emittieren keine oder nur geringe Anteile organischer Substanzen, können aber eine starke Hautreizwirkung oder Sensibilisierung ausüben. Der je nach Viskositätseinstellung schwankende Anteil an Raktivverdünnern beeinflußt die Lackeingenschaften zum Teil erheblich. Schließlich sind derartige Lacksysteme mit 100 % Festkörper-Anteil für die offenporige Holzlackierung nicht geeignet.

Bei wasserverdünnbaren Lösungsmitteln wird die Verarbeitungsviskosität der Lacke durch Zusatz von Wasser eingestellt. Die Lackbindemittel sind aber im allgemeinen nicht in Wasser löslich, sondern nur emulgierbar.

Daraus ergeben sich folgende Nachteile:

1. Die Dispersion ist aufwendig herzustellen.
2. Begrenzte Lagerstabilität.
3. Die Viskosität läßt sich bei Dispersionen weniger einfach einstellen als bei echten Lösungen, bei denen man durch steigende Anteile an Verdünnungsmitteln die Viskosität gezielt herabsetzen kann.
4. Mit Dispersionen erreicht man in der Regel eine schlechtere Porenbenetzung bei der Lackierung von Holz als bei der Verwendung von Lacken, die echte Lösungen sind.

Wasserverdünnbare Bindemittel für die Strahlenhärtung stellen bisher stets Öl-in-Wasser-Dispersionen dar (vgl. z.B. DE-A-3 441 154, EP-A-0 209 684, DE-A-3 340 589).

Aus DE-A-3 340 589 ist bekannt, daß man durch Cokondensation von Dicarbonsäure-Anhydriden und Acrylsäure mit gesättigten zweiwertigen Polyetheralkoholen, zweiwertigen gesättigten Alkoholen und dreiwertigen gesättigten oxalkylierten Alkoholen Lackrohstoffe herstellen kann, die sich für die Strahlenhärtung eignen. Derartige Lackbindemittel sind in Wasser emulgierbar, jedoch nicht löslich. Entsprechend der DE-A-3 340 589 erreicht man durch Einbau höherer Anteile an Polyalkylenglykolen in die Polyester emulgierbare bzw. sogar wasserlösliche Produkte, die jedoch eine ungenügende Wasserbeständigkeit aufweisen.

Die DE-A-3 441 154 betrifft ungesättigte Polyester, die ohne organische Lösungsmittel und ohne externe Emulgatoren in Wasser dispergiert werden können. Nachteilig an diesen Polyestern ist ihre im Vergleich zu Acrylatestern langsame Härtungsgeschwindigkeit. Weiterhin treten die allgemeinen Nachteile von Emulsionen/Dispersionen (s.o.) auf.

Aufgabe der vorliegenden Erfindung ist es, ein wasserlösliches polymerisierbares Lackbindemittel zur Verfügung zu stellen, das nach der Härtung gute Lackeigenschaften, insbesondere Wasserfestigkeit, aufweist.

Gegenstand der vorliegenden Erfindung sind wasserlösliche, polymerisierbare Bindemittel, die für die Oberflächenbeschichtung geeignet sind, enthaltend cokondensierte Reste von hydroxylgruppenhaltigen Verbindungen, wenigstens einer Polycarbonsäure und wenigstens einer ungesättigten Carbonsäure, dadurch gekennzeichnet, daß das Bindemittel erhältlich ist durch Kondensation von jeweils wenigstens einer der folgenden Verbindungen:

1. einem Polyalkylenglykol A mit einem Molekulargewicht von 200 bis 800, insbesondere einem Polyethylenglykol;
2. einem Polyalkylenglykol B mit einem Molekulargewicht von 1.00 bis 5.000, gegebenenfalls modifiziert.
3. einem alkoxyiertem Polyol C;
4. einer Polycarbonsäure D, insbesondere einer Dicarbonsäure E oder einer Tricarbonsäure F; und
5. einer gegebenenfalls substituierten Acrylsäure G,

wobei bezogen auf 100 Gew.-Teile der Summe aus den Bestandteilen A bis G wenigstens 10 Gew.-Teile A und 5 Gew.-Teile B enthalten sind.

Sofern im folgenden nichts anderes angegeben ist, handelt es sich bei den Molekulargewichten um das Zahlenmittel $\overline{M}_N$.

In einer bevorzugten Ausführungsform werden, bezogen auf die Komponenten A bis C, pro Mol OH-Gruppen 0,8 bis 1 Mol Carbonsäuregruppen, gegebenenfalls in Form von Anhydridgruppierungen, zur

2

Herstellung eingesetzt. Bevorzugte Polyalkylenglykole A sind Polyethylenglykole, insbesondere mit einem Molekulargewicht von 300 bis 600. Bevorzugte Polyalkylenglykole B haben ein Molekulargewicht von 1.500 bis 3.000. Es handelt sich dabei insbesondere um Polyethylenglykol, oder um Ethylenglykol/Propylenglykol-Copolymere, oder um Hydroxylgruppenhaltige Polyester aus vorzugsweise 90 bis 95 Gew.-% Polyalkylenglykol, insbesondere Polyethylenglykol, und 5 bis 10 Gew.-% Dicarbonsäure bzw. Dicarbonsäureanhydrid, insbesondere das Reaktionsprodukt aus Polyethylenglykolen mit einem Molekulargewicht von ca. 400 und Maleinsäureanhydrid.

In einer besonders bevorzugten Ausführungsform haben die Polyalkylenglykole A und B eine molekulare Uneinheitlichkeit von $\overline{M}_w/\overline{M}_N \leqq 2$ (vergleiche H.G. Elias, Makromoleküle, Hüthig und Wepf Verlag, Basel, Heidelberg, New York, 4. Auflage, 1981, Seite 256).

Bevorzugte alkoxylierte Polyole C haben mehr als zwei Hydroxyendgruppen und 2 bis 20 Mol Ethylen- oder Propylenoxideinheiten pro Mol Polyol. Vorzugsweise haben die Polyole C ein Molekulargewicht von ca. 250-600 g/mol. Ganz besonders bevorzugte Verbindungen C sind Glycerin oder Trimethylolpropan, gepfropft mit 3 bis 6 Mol Ethylenoxid oder Propylenoxid pro Mol Triol.

Bei den Polycarbonsäuren D handelt es sich vorzugsweise um Dicarbonsäuren E oder Tricarbonsäuren F bzw. um die Anhydride davon, Bevorzugte Verbindungen D sind Maleinsäure-(Anhydrid), Fumarsäure, Malonsäure, Itaconsäure, Bernsteinsäure, Adipinsäure, Phthalsäure (-anhydrid), hydrierte oder teilhydrierte Phthalsäure oder äquivalente Mengen der Tricarbonsäure Trimellitsäure (-anhydrid) oder Citronensäure/Citronensäurederivate oder Mischungen davon. Besonders bevorzugt ist Maleinsäureanhydrid.

Bevorzugte gegebenenfalls substituierte Acrylsäuren G sind Acrylsäure oder Methacrylsäure.

Die Komponenten A bis G werden in folgenden Mengenverhältnissen eingesetzt;

| | |
|---|---|
| Polyalkylenglykol A: | 0,02 bis 0,1 Mol, insbesondere 0,05 bis 0,07 Mol. |
| Polyalkylenglykol B: | 0,002 bis 0,02 Mol, insbesondere 0,004 bis 0,006 Mol. |
| Alkoxyliertes Polyol C: | 0,05 bis 0,25 Mol, insbesondere 0,1 bis 0,15 Mol. |
| Polycarbonsäure D: | 0,05 bis 0,25 Mol, insbesondere 0,15 bis 0,2 Mol im Falle einer Dicarbonsäure E und 0,06 bis 0,18 Mol im Falle einer Tricarbonsäure F. |
| Gegebenenfalls substituierte Acrylsäure G: | 0,05 bis 0,35 Mol, insbesondere 0,12 bis 0,18 Mol. |

Bei der Herstellung der erfindungsgemäßen Bindemittel können die üblichen Hilfsstoffe wie Inhibitoren, Kondensationsbeschleuniger, Radikalbildner oder Fotoinitiatoren zur Härtung eingesetzt werden.

Die Herstellung der erfindungsgemäßen Bindemittel erfolgt Vorzugsweise als Schmelzkondensation bei 150 bis 250°C mit anschließender Kondensation der gegebenenfalls substituierten Acrylsäure G unter azeotroper Wasserentfernung. Außerdem wird bei der erfindungsgemäßen Herstellung das alkoxylierte Polyol C Vorzugsweise in der 1. Stufe der Schmelzkondensation zugesetzt.

Wahlweise kann die Herstellung des erfindungsgemäßen Produktes auch in einer Stufe mit azeotroper Wasserentfernung durchgeführt werden.

Als azeotrope Schlepper können organische Kohlenwasserstoffe, wie z.B. Cyclohexan, Isooctan, Benzol oder Toluol eingesetzt werden, Als Veresterungskatalysatoren eignen sich organische und anorganische Säuren, z.B, para-Toluolsulfonsäure, Salzsäure oder konzentrierte Schwefelsäure. Als Inhibitoren gegen Vorzeitige Polymerisation eignen sich Hydrochinonderivate, z.B. di-tert.-Butylhydrochinon in Kombination mit Lufteinleitung durch das Reaktionsgemisch oder Phenothiazin, kombiniert mit Stickstoffatmosphäre. Geeignete Inhibitoren werden z.B. im "Houben Weyl, Methoden der Organischen Chemie", 4. Aufl., Bd. 14/1, S. 433 ff, G. Thieme-Verlag, Stuttgart (1961) beschrieben, das Prinzip der Schmelzkondensation in Bd. 14/2 (1963), S. 32 f.

Überraschenderweise weisen die wasserlöslichen erfindungsgemäßen Lackbindemittel gute Lackeigenschaften auf. Die erfindungsgemäße notwendige Verwendung von zwei Polyethylenglykolen mit unterschiedlichem Molekulargewicht ist notwendig, wie man anhand von Vergleichsbeispiel 1 erkennt. In Vergleichsbeispiel 1 wird ausschließlich Polyethylenglykol 600 eingesetzt; damit erhält man jedoch Reaktionsprodukte, die nicht wasserlöslich sind.

Die Lackeigenschaften können auf Wunsch durch Zusatz von Reaktivverdünnern wie z.B. Hexandioldiacrylat, weiteren hochmolekularen Lackbindemitteln, Verlaufshilfsmittel, Mattierungsmittel etc. weiter entsprechend den jeweiligen Erfordernissen variiert werden.

Geeignete Applikationsformen sind Spritzen, Walzen und Gießen.

Das erfindungsgemäße Bindemittel bildet in Wasser echte oder kolloidale Lösungen. Unter kolloidalen Lösungen werden solche Lösungen verstanden, bei denen die Teilchengröße so gering ist, daß die Probe in einem Reagenzglas von 10 mm Innenweite bei Betrachtung mit dem Auge im Tageslicht noch transparent erscheint.

Das erfindungsgemäße Bindemittel kann nach Verdunstung des Wassers polymerisiert werden, wobei man Lackschichten mit günstigen Oberflächeneigenschaften auf z.B. Holz erhält. Die Polymerisation kann thermisch unter Zusatz von Polymerisationsinitiatoren (z.B. von Radikalbildnern) erfolgen, aber auch durch energiereiche Strahlung (UV-, Elektronstrahlen, Röntgen-, Gammastrahlen) eingeleitet werden. Bei UV-Härtungen ist der Zusatz von Fotoinitiatoren (z.B. Benzophenon, Benzoinethern, vgl. S.P. Pappas, UV-Curing, Science and Technology, Technology Marketing Corp., Norwalk, USA (1978), S. 9) im allgemeinen erforderlich.

Das Lackbindemittel kann nicht nur mit Wasser, sondern auf Wunsch mit organischen Lösemitteln verdünnt werden, z.B. mit Ethanol. Man erreicht schon bei geringer Verdünnung eine deutliche Reduzierung der Viskosität der Mischung.

Das erfindungsgemäße Bindemittel kann insbesondere bei Lacken Einsatz finden, die auf Basis von Wasser und ungesättigten Polyestern bzw. Acrylaten aufgebaut sind und die üblichen Lackbestandteile enthalten, wie insbesondere Fotoinitiatoren und/oder Peroxyde bzw. Azoverbindungen, weitere Lackbindemittel wie z.B. Acrylate, Polyurethane, Cellulosederivate, z.B. Cellulosenitrat, Verlaufhilfsmittel, Entlüfter, Inhibitoren, Tixotropieeinsteller, gegebenenfalls auch organische Lösungsmittel, z.B. Ethanol.

### Beispiel 1

Folgende Substanzen werden in einen 500-ml-Zweihalskolben gegeben und 30 Minuten unter Normaldruck im offenen Kolben auf 180°C erhitzt: 22 g (0,055 Mol) Polyethylenglykol 400, 10 g (0,005 Mol) Polyethylglykol 2000, 38 g (0,13 Mol) tripropoxyliertes Trimethylolpropan, 17 g (0,17 Mol) Maleinsäureanhydrid, 0,8 g para-Toluolsulfonsäure und 0,1 g di-tert.-Butylhydrochinon. Nach Abkühlung setzt man in zweiter Stufe 200 ml Toluol und 10,7 g Acrylsäure (0,15 Mol) zu und erhitzt 15 Stunden am Wasserabscheider mit Rückflußkühler (145°C Badtemperatur).

Die zweite Reaktionsstufe wurde in einer Kreislaufapparatur mit Wasserabscheider und nachfolgender Lösungsmitteltrocknung mittels Molekularsieb durchgeführt, vgl. D. Braun, H. Cherdron, W. Kern, Praktikum der Makromolekularen Organischen Chemie, A. Hüthig-Verlag, Heidelberg, 3. Auflage (1979), S. 71.

Man erhält nach Entfernung des Toluols am Rotationsverdampfer (bei 50 mbar) ein Reaktionsprodukt mit einer Säurezahl von ca. 20 mg KOH/g. Das Reaktionsprodukt ist hochviskos und erstarrt nach einigen Tagen wachsartig.

### Anwendung

Nach Zusatz von 3 % 2-Hydroxy-2-methyl-1-phenyl-propan-1-on : Benzophenon im Verhältnis 2:1 zu der 50 %igen wäßrigen Lösung des Reaktionsproduktes aus Beispiel 1 wird die Probe auf eine Glasplatte (90 $\mu$m Schichtdicke) aufgerakelt, getrocknet und mit UV-Licht bestrahlt (80 W/cm). Man erhält einen transparenten, glatten Film mit einer Pendelhärte nach König (DIN 53 157) von 50 s. Die Lackierung ist entsprechend DIN 53 168 wasserbeständig (vgl. Tabelle 1).

### Beispiel 2

Beispiel 1 wird mit dem Unterschied wiederholt, daß anstelle des tripropoxylierten Trimethylolpropans 38 g (0,13 Mol) ethoxyliertes Glycerin eingesetzt werden. Man erhält ein zähflüssiges Produkt, das gut in Wasser löslich ist. Mit geringen Zusätzen von Wasser kann das Produkt auf Verarbeitungsviskosität eingestellt werden.

Die Pendelhärte des wie oben hergestellten Lackfilms beträgt 65 s der Film ist wasserbeständig (vgl. Tabelle 1).

### Beispiel 3 und 4

Das Beispiel 1 wird mit veränderten Mengenverhältnissen der Ausgangsstoffe wiederholt (vgl. Tabelle 1). Die Produkte sind wasserlöslich, die Lackfilme nach Härtung wasserbeständig.

### Beispiel 5

Beispiel 5 erfolgt analog zu Beispiel 2, jedoch mit Methacrylsäure (vgl. Tabelle 1).

### Beispiel 6

4

Beispiel 2 wird mit dem Unterschied wiederholt, daß alle Ausgangsstoffe mit Toluol unter azeotroper Wasserabscheidung umgesetzt werden, d.h. ohne Schmelzkondensationsstufe. Man erhält nach 14 Stunden Reaktionszeit ein Produkt mit gleichen Eigenschaften, wie das Produkt im Beispiel 2.

Vergleichsbeispiel 1

Im Unterschied zu den erfindungsgemäßen Beispielen 1 bis 4 wird ausschließlich Polyethylenglykol 600 eingesetzt (vgl. Tabelle 1). Das Produkt ist nicht wasserlöslich, sondern bildet nach Verdünnen mit Wasser eine Emulsion, die sich innerhalb eines Tages in zwei Phasen trennt. Die wie in Beispiel 1 erzeugten Lackfilme nehmen nach der UV-Härtung proportional der Luftfeuchtigkeit Wasser auf, was zu einer entscheidenden Qualitätseinbuße der Lackfilme führt.

Vergleichsbeispiel 2

Bei Vergleichsbeispiel 2 wird als Triol-Komponente Glycerin eingesetzt. Das Produkt vergelt jedoch bei Ausführung der zweiten Reaktionsstufe vorzeitig, auch bei erhöhter Inhibitorkonzentration (2.500 ppm). Glycerin, das nicht alkoxyliert ist, ist somit als Alkoholkomponente ungeeignet (vgl. Tabelle 1).

Vergleichsbeispiel 3

Das Vergleichsbeispiel wird entsprechend Beispiel 5 der DOS 3 340 589 nachgearbeitet. Das erhaltene Produkt ist in Wasser emulgierbar, aber nicht löslich (vgl. Tabelle 1).

# Tabelle 1

| Komponente (Mol) | Produkt Beispiel 1 | Beispiel 2 | Beispiel 3 | Beispiel 4 | Beispiel 5 | Vergleichsbeispiel 1 | Vergleichsbeispiel 2 | Vergleichsbeispiel 3 |
|---|---|---|---|---|---|---|---|---|
| Polyethylenglykol 400 | 0,055 | 0,055 | 0,036 | 0,056 | 0,055 | - | 0,055 | - |
| Polyethylenglykol 2000 | 0,0050 | 0,0050 | 0,0040 | 0,035 | 0,0050 | - | 0,0050 | 0,023 |
| Polyethylenglykol 600 | - | - | - | - | - | 0,625 | - | - |
| 1,2 Propylenglykol | - | - | - | - | - | - | - | 0,48 |
| tripropoxyliertes Trimethylolpropan | 0,13 | - | 0,14 | 0,13 | - | 0,13 | - | 1,0 |
| tetra-ethoxyliertes Glycerin | - | 0,13 | - | - | 0,13 | - | - | - |
| Glycerin | - | - | - | - | - | - | 0,13 | - |
| Maleinsäureanhydrid | 0,17 | 0,17 | 0,17 | 0,17 | 0,17 | 0,12 | 0,17 | 1,0 |
| Acrylsäure | 0,15 | 0,15 | 0,15 | 0,15 | - | 0,25 | 0,15 | 1,8 |
| Methacrylsäure | - | - | - | - | 0,15 | - | - | - |
| wasserlöslich | ja | ja | ja | ja | ja | nein | entfällt (da vergelt) | nein |
| Säurezahl (mg KOH/g) | 25 | 20 | 20 | 11 | 20 | 11 | - | 11 |
| Pendelhärte(s) nach DIN 53 157 50 μ auf Glas | 50 | 65 | 50 | 50 | 55 | 45 | - | 50 |
| Verlauf auf Holz | gut | gut | gut | gut | gut | gut | - | leichte Kraterbildung |
| Wasserbeständigkeit (DIN 53 169) | bestanden | bestanden | bestanden | bestanden | bestanden | nicht bestanden | - | bestanden |
| Gitterschnittgüte (Iso-Norm 2409) | GT 0 | GT 0-1 | GT 1 | GT 1 | GT 1 | GT 1 | - | GT 2 |

## Patentansprüche

1. Wasserlösliche, polymerisierbare Bindemittel, die für die Oberflächenbeschichtung geeignet sind, enthaltend cokondensierte Reste von hydroxylgruppenhaltigen Verbindungen, wenigstens einer Polycarbonsäure und wenigstens einer ungesättigten Carbonsäure, dadurch gekennzeichnet, daß das Bindemittel erhältlich ist durch Kondensation von jeweils wenigstens einer der folgenden Verbindungen:

1. 0,02 bis 0,1 Mol eines Polyalkylenglykols A mit einem Molekulargewicht von 200 bis 800;

2. 0,002 bis 0,02 Mol eines Polyalkylenglykols B mit einem Molekulargewicht von 1.000 bis 5.000;

3. 0,05 bis 0,25 Mol eines alkoxylierten Polyols C;

4. 0,05 bis 0,25 Mol einer Polycarbonsäure D; und

5. 0,05 bis 0,35 Mol einer gegebenenfalls substituierten Acrylsäure G, wobei bezogen auf 100 Gew,-Teile der Summe aus den Bestandteilen A bis G wenigstens 10 Gew.-Teile A und 5 Gew.-Teile B enthalten sind.

2. Bindemittel nach Anspruch 1, dadurch gekennzeichnet, daß die Ausgangsverbindungen A bis C pro Mol OH-Gruppen mit 0,8 bis 1 Mol Carboxylgruppen umgesetzt wurden.

3. Bindemittel nach wenigstens einem der vorhergehenden Ansprüche, dadurch gekennzeichnet, daß das alkoxylierte Polyol C mehr als zwei Hydroxyendgruppen und 2 bis 20 Mol Ethylen- oder Propylenoxideinheiten pro Mol Polyol aufweist.

4. Bindemittel nach wenigstens einem der vorhergehenden Ansprüche, dadurch gekennzeichnet, daß die Polycarbonsäure D eine Dicarbonsäure E oder eine Tricarbonsäure F ist und die ungesättigte Carbonsäure G Acrylsäure oder Methacrylsäure ist.

5. Bindemittel nach wenigstens einem der vorhergehenden Ansprüche, dadurch gekennzeichnet, daß die Polycarbonsäure D Maleinsäure, Maleinsäureanhydrid, Fumarsäure, Malonsäure, Itaconsäure, Bernsteinsäure, Adipinsäure, Phthalsäure, Phthalsäureanhydrid, gegebenenfalls hydrierte Phthalsäure, Trimellitsäure oder Citronensäure ist.

6. Lacke, enthaltend Bindemittel und übliche weitere Zusätze, dadurch gekennzeichnet, daß als Bindemittel ein Bindemittel gemäß wenigstens einem der vorhergehenden Ansprüche verwendet wird.

7. Verfahren zur Lackierung einer Oberfläche mit einem Lack, dadurch gekennzeichnet, daß ein Lack gemäß Anspruch 6 verwendet wird.

8. Bindemittel nach Ansprüchen 1-2, dadurch gekennzeichnet, daß das Polyalkylenglykol A Polyethylenglykol ist.

9. Bindemittel nach Ansprüchen 1-2, dadurch gekennzeichnet, daß das Polyalkylenglykol B Polyethylenglykol, ein Ethylenglykol-/Propylenglykol-Copolymeres oder ein hydroxylgruppen-haltiger Polyester aus 90-95 Gewichtsprozent Polyalkylenglykol und 5-10 Gewichtsprozent Dicarbonsäure oder Dicarbonsäureanhydrid ist.

## Claims

1. Water-soluble polymerizable binders suitable for surface coating containing co-condensed residues of hydroxyfunctional compounds, at least one polycarboxylic acid and at least one unsaturated carboxylic acid, characterized in that the binder is obtainable by condensation of at least one of the following compounds:

1. 0.02 to 0.1 mol of a polyalkylene glycol A having a molecular weight of 200 to 800;

2. 0.002 to 0.02 mol of a polyalkylene glycol B having a molecular weight of 1,000 to 5,000;

3. 0.05 to 0.25 mol of an alkoxylated polyol C;

4. 0.05 to 0.25 mol of a polycarboxylic acid D and

5. 0.05 to 0.35 mol of an optionally substituted acrylic acid G, at least 10 parts by weight A and 5 parts by weight B being present per 100 parts by weight of the sum of constituents A to G.

2. Binders as claimed in claim 1, characterized in that the starting compounds A to C were reacted with 0.8 to 1 mol carboxyl groups per mol OH groups.

3. Binders as claimed in at least one of the preceding claims, characterized in that the alkoxylated polyol C contains more than two terminal hydroxyl groups and 2 to 20 mol ethylene or propylene oxide units per mol polyol.

4. Binders as claimed in at least one of the preceding claims, characterized in that the polycarboxylic acid D is a dicarboxylic acid E or a tricarboxylic acid F and the unsaturated carboxylic acid G is acrylic acid or methacrylic acid.

5. Binders as claimed in at least one of the preceding claims, characterized in that the polycarboxylic acid D is maleic acid, maleic anhydride, fumaric acid, malonic acid, itaconic acid, succinic acid, adipic acid, phthalic acid, phthalic anhydride, optionally hydrogenated phthalic acid, trimellitic acid or citric acid.

6. Lacquers containing binders and typical other additives, characterized in that a binder according to at least one of the preceding claims is used as the binder.

7. A process for lacquering a surface with a lacquer, characterized in that a lacquer according to claim 6 is used.

8. Binders as claimed in claims 1 and 2, characterized in that the polyalkylene glycol A is polyethylene glycol.

9. Binders as claimed in claims 1 and 2, characterized in that the polyalkylene glycol B is polyethylene glycol, an ethylene glycol/propylene glycol copolymer or a hydroxyfunctional polyester of 90 to 95% by weight polyalkylene glycol and 5 to 10% by weight dicarboxylic acid or dicarboxylic anhydride.

**Revendications**

1. Liants polymérisables hydrosolubles, qui conviennent pour le revêtement de surfaces, contenant des restes co-condensés de composés porteurs de groupes hydroxyle, d'au moins un acide polycarboxylique et d'au moins un acide carboxylique non saturé, caractérisés en ce que chacun d'eux peut être obtenu par condensation, dans chaque cas, d'au moins l'un des composés suivants :
   1. 0,02 à 0,1 mole d'un polyalkylèneglycol A ayant un poids moléculaire de 200 à 800 ;
   2. 0,002 à 0,02 mole d'un polyalkylèneglycol B ayant un poids moléculaire de 1000 à 5000 ;
   3. 0,05 à 0,25 mole d'un polyol alkoxylé D ;
   4. 0,05 à 0,25 mole d'un acide polycarboxylique D ;
   5. 0,05 à 0,35 mole d'un acide acrylique G éventuellement substitué, au moins 10 parties en poids de A et 5 parties en poids de B étant contenues par rapport à 100 parties en poids de la somme des constituants A à G.

2. Liant suivant la revendication 1, caractérisé en ce que les composés de départ A à C ont réagi avec 0,8 à 1 mole de groupes carboxyle par mole de groupes OH.

3. Liant suivant au moins l'une des revendications précédentes, caractérisé en ce que le polyol alkoxylé C présente plus de deux groupes hydroxy terminaux et 2 à 20 motifs molaires oxyde d'éthylène ou oxyde de propylène par mole de polyol.

4. Liant suivant au moins l'une des revendications précédentes, caractérisé en ce que l'acide polycarboxylique D est un acide dicarboxylique E ou un acide tricarboxylique F et l'acide carboxylique non saturé G est l'acide acrylique ou l'acide méthacrylique.

5. Liant suivant au moins l'une des revendications précédentes, caractérisé en ce que l'acide polycarboxylique D est l'acide maléique, l'anhydride d'acide maléique, l'acide fumarique, l'acide malonique, l'acide itaconique, l'acide succinique, l'acide adipique, l'acide phtalique, l'anhydride d'acide phtalique, l'acide phtalique éventuellement hydrogéné, l'acide trimellitique ou l'acide citrique.

6. Laques contenant des liants et d'autres additifs classiques, caractérisées en ce qu'on utilise comme liant un liant suivant au moins l'une des revendications précédentes.

7. Procédé de revêtement d'une surface avec une laque, caractérisé en ce qu'on utilise une laque suivant la revendication 6.

8. Liant suivant les revendications 1 et 2, caractérisé en ce que le polyalkylèneglycol A est le polyéthylèneglycol.

9. Liant suivant les revendications 1 et 2, caractérisé en ce que le polyalkylèneglycol B est un polyéthylèneglycol, un polymère éthylèneglycol/propylèneglycol ou un polyester contenant des groupes hydroxyle constitué de 90 à 95 % en poids de polyalkylèneglycol et de 5 à 10 % en poids d'acide dicarboxylique ou d'anhydride d'acide dicarboxylique.